# EUROPÄISCHE PATENTANMELDUNG

(11) **EP 4 622 178 A1**
(43) Veröffentlichungstag der Anmeldung: **24.09.2025**
(21) Anmeldenummer: 25159790.2
(22) Anmeldetag: 25.02.2025
(51) Int. Cl.: H04L 9/40, H04L 61/5014, H04L 67/1034

(54) **MODULARE UND DYNAMISCHE STEUERUNG VON MASCHINEN IN EINEM NETZWERK**

(30) Priorität: 20.03.2024 DE 102024107971
(71) Anmelder: Krones AG, 93073 Neutraubling (DE)
(72) Erfinder: Froehler, Sebastian, 93073 Neutraubling (DE)
(74) Vertreter: Grünecker Patent- und Rechtsanwälte PartG mbB

(57) **Zusammenfassung**

Die Erfindung betrifft eine Maschinenlinie und eine Maschine in der Maschinenlinie, insbesondere in einer Maschinenlinie zum Abfüllen und Verpacken von Lebensmitteln und/oder Getränken. Die Maschine umfasst einen Industrie-PC (IPC) der eine softwaredefinierte Edge-Vorrichtung für die Maschine implementiert und einen Hypervisor umfasst. Der Hypervisor stellt eine virtuelle Betriebsplattform zum Hosten und/oder Betreiben von entsprechenden Diensten für den Betrieb der Maschinenlinie bereit. Gemäß Ausführungsformen implementiert der IPC bzw. Hypervisor eine Demilitarisierten Zone (DMZ) mit eigenen Netzwerksegmenten, in welchen die virtuelle Betriebsplattform implementiert ist. Des Weiteren kann der IPC eine Verbindung mit einem Netzwerk der Maschinenlinie herstellen, das eine Vielzahl von Maschinen miteinander verbindet, die jeweils einen IPC umfassen. Der IPC ist weiterhin so ausgelegt, dass er Arbeitslasten unter der Maschine und wenigstens einer zweiten Maschine in dem Netzwerk der Maschinenlinie aufteilen kann.

## Beschreibung

Die Erfindung betrifft eine Maschine, eine Maschinenlinie und ein Computerprogramm, ein Computerlesbares Speichermedium zur modularen und dynamischen Steuerung von Maschinen, insbesondere von Maschinen in einer Maschinenlinie zum Abfüllen und Verpacken von Lebensmitteln und/oder Getränken.

Im Bereich der industriellen Fertigung und insbesondere im Bereich der Maschinenlinien der Getränke- und Lebensmitteltechnologie hat die Integration von Netzwerkfähigkeiten in diese Maschinenlinien zu bedeutenden Fortschritten geführt. Diese Entwicklung ermöglicht verbesserte Überwachung, Effizienz und Automatisierung der Produktions-, Verpackungs- und Abfüllprozesse. Jedoch weist der Stand der Technik einige wesentliche Nachteile auf, die beispielsweise sowohl die Betriebskosten als auch die Sicherheit betreffen.

Derzeit sind in der Praxis die meisten Maschinenanlagen mit dedizierten Netzwerk-Switches auf der Linienebene ausgestattet. Diese Switches sind dafür verantwortlich, die Kommunikation innerhalb einzelner Produktionslinien zu erleichtern. Während diese Lösung eine effiziente Datenübertragung innerhalb der Linien gewährleistet, führt sie zu einer erhöhten Komplexität in der Netzwerkverwaltung. Jede Linie erfordert einen eigenen Switch, was die Wartung und Skalierung des Netzwerks erschwert. Dies wird insbesondere dann problematisch, wenn Anpassungen oder Erweiterungen der Anlage erforderlich sind, da jede Änderung individuell auf jeder Linie durchgeführt werden muss.

Zusätzlich zu den Switches wird jede Linie oder Anlage durch einen eigenen Hardware-Router (d.h. ein Linien-Switch übergreifend pro Linie) mit dem zentralen Unternehmensnetzwerk verbunden, was einen zentralen Ort/Netzwerkschrank benötigt und entsprechend kostenintensiv und aufwändig ist und gleichzeitig wenig modular und nicht dezentral erweiterbar ist. Diese getrennte Netzwerkinfrastruktur pro Linie steigert nicht nur die Verwaltungskomplexität, sondern erhöht auch die Kosten für Hardware und Instandhaltung. Insbesondere bei Anlagen mit mehreren Maschinen, erfordert dies die Bereitstellung eines zentralen Netzwerkschranks, der erhebliche Investitionen mit sich bringt. Die Kosten für solch eine Einrichtung, einschließlich der notwendigen Ingenieurleistungen, können schnell 10.000 Euro überschreiten, was besonders für kleinere Betriebe eine erhebliche finanzielle Belastung darstellt.

Ein weiterer kritischer Aspekt sind die sogenannten "Bare-2-Metal" Installationen, bei denen Software direkt auf der Hardware installiert wird, ohne eine Zwischenschicht wie ein Betriebssystem. Obwohl diese Konfiguration Vorteile in Bezug auf die Leistung bietet, schränkt sie die Flexibilität und Skalierbarkeit der Systeme ein.

Weitere Nachteile ergeben sich aus der mangelnden Sicherheit dieser Netzwerkkonfigurationen. Viele Anlagen erfüllen nicht grundlegende Sicherheitsmaßnahmen wie Firewalls. Diese Vernachlässigung der Netzwerksicherheit und eine Nichtkonformität mit dem ISA95-Standard, einem wichtigen Industriestandard für die Integration von Unternehmens- und Kontrollsystemen, macht die Anlagen anfällig für Cyberangriffe und Datenlecks. Dies kann zu schwerwiegenden Folgen führen, darunter Betriebsunterbrechungen, Datenverlust und sogar physische Schäden an der Ausrüstung.

Es besteht daher ein Bedarf an einer Lösung, die diese Nachteile im Stand der Technik überwindet und somit eine modulare und dynamische Steuerung von Maschinen in einem Netzwerk von Maschinen für Abfüll- und Verpackungsmaschinen, Linien und Anlagen auf bereitstellt.

Die Aufgabe wird erfindungsgemäß durch eine Maschine gemäß Anspruch 1, ein computerlesbares Speichermedium gemäß Anspruch 9 und eine Maschinenlinie gemäß Anspruch 10 gelöst. Ausführungsformen und Weiterbildungen sind in den Unteransprüchen erfasst.

Eine Ausführungsform der Erfindung betrifft eine Maschine in einer Maschinenlinie, insbesondere in einer Maschinenlinie zum Abfüllen und Verpacken von Lebensmitteln und/oder Getränken. Die Maschine umfasst einen Industrie-PC (IPC), der eine software-definierte Edge-Vorrichtung für die Maschine implementiert und einen Hypervisor umfasst. Der Hypervisor stellt eine virtuelle Betriebsplattform zum Hosten und/oder Betreiben von Diensten für den Betrieb der Maschinenlinie bereit. Gemäß Ausführungsordnungen hat der IPC die virtuelle Betriebsplattform bzw. den Hypervisor "bare-to-metal" installiert.

Weitere Ausführungsformen betreffen ein computerlesbares Speichermedium und eine Maschinenlinie.

Beispielhafte Aspekte der Erfindung sind in den Zeichnungen dargestellt. Es zeigen:
**Figur** 1: ein Diagramm, das wabenförmige Anordnung von Zellen in einem Netzwerk gemäß Ausführungsformen der Erfindung zeigt;
**Figur 2****:** eine beispielhafte Maschine, die einen IPC und mehrere virtualisierte Netzwerkebenen zeigt;
**Figur 3****:** eine beispielhafte Anlagenkonfiguration für PET-Behälter und Klebegebinde;
**Figur 4****:** eine beispielhafte Anlagenkonfiguration für PET-Behälter und Schrumpfpacker;
**Figur 5****:** eine beispielhafte Anlagenkonfiguration für Dosen oder Glasflaschen; und
**Figur 6****:** eine beispielhafte Anlagenkonfiguration für Dosen.

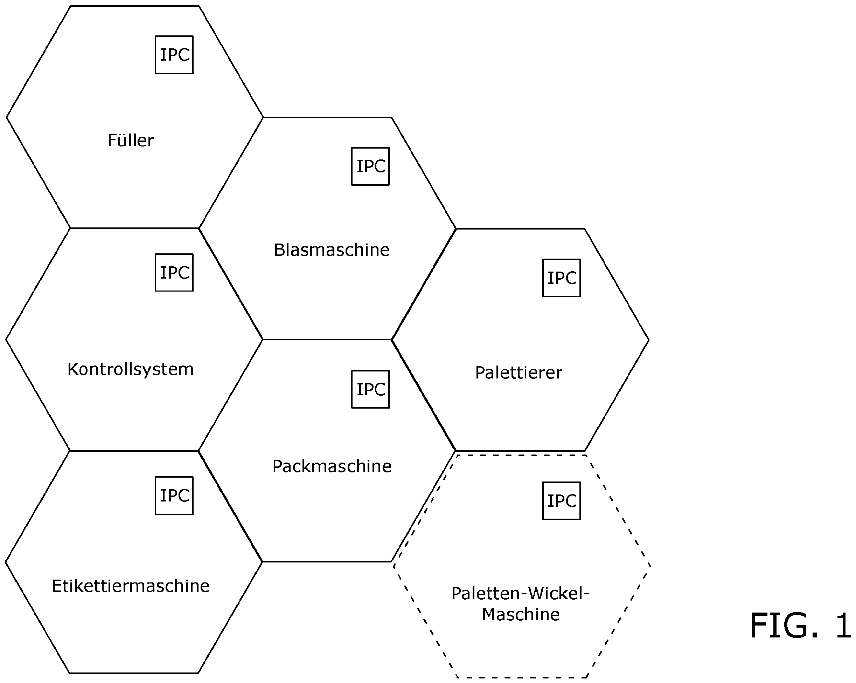

Die Erfindung liefert einen Ansatz, um die oben beschriebenen Nachteile zu überwinden, indem für jede Maschine in einer Maschinenlinie eine "Software-Definierte" Edge-Vorrichtung implementiert wird. Diese kann gemäß Ausführungsformen auf einem Industrie-PC (IPC) implementiert werden. Dadurch lässt sich die Organisation der eigenständigen Edge-Vorrichtungen so modular gestalten, dass jede Maschine wie eine Zelle fungiert, die wie einem Wabenkonzept modular hinzugefügt werden kann. Dieses Konzept ist in Figur 1 zu sehen, in dem eine beispielhafte Anordnung von Maschinen in einem wabenartigen Aufbau organisiert sind. Jede der beispielhaften Maschinen verfügt über einen entsprechenden IPC, der eine Betriebsplattform bzw. einen Hypervisor implementiert. Eine solche Betriebsplattform kann verschiedenste Dienste für den Betrieb der Maschinenlinie bereitstellen. Der Hypervisor kann "bare-to-metal" auf dem IPC implementiert sein und eine Virtualisierungsumgebung bereitstellen, die gleichzeitige Ausführung mehrerer Betriebssysteme oder virtueller Maschinen auf einem einzigen physischen IPC ermöglicht. Dies kann es ermöglichen, unterschiedliche Dienste auf demselben IPC auszuführen, ohne dass diese sich gegenseitig beeinträchtigen oder Konflikte verursachen. Zudem können Dienste mittels dem Hypervisor zwischen verschiedenen IPCs verschoben oder dupliziert werden, um eine flexible Skalierbarkeit und Ausfallsicherheit zu gewährleisten, wie im Folgenden noch weiter erklärt.

Je mehr Maschinen in einer Linie auf diese Weise organisiert sind, desto robuster ist die gegebene Infrastruktur, da mittels Ausführungsformen Lasten verteilen werden können. Beispiele für zu verteilende Lasten sind also Dienste (Services) verschiedener Edge-Vorrichtungs-Funktionalitäten oder Linien-Management, die jeweils auf diesem IPC ausgeführt werden.

Die Verwendung von softwaredefinierter Netzwerktechnologie, wie in den hierin beschriebenen Ausführungsformen gezeigt, ermöglicht eine hohe Flexibilität und vereinfacht die Netzwerkverwaltung. In der beispielhaften Netzwerk-Architektur kann dies genutzt werden, um die Netzwerkkomponenten zu virtualisieren. Dies führt zu einer Reduzierung physischer Netzwerkkomponenten und erleichtert die modulare und skalierbare Gestaltung der Maschinenlinie.

Gemäß Ausführungsformen ist der IPC so ausgelegt, dass er eine software-definierte Edge-Vorrichtung für die Maschine implementiert und einen Hypervisor umfasst. Der Hypervisor stellt eine virtuelle Betriebsplattform zum Hosten und/oder Betreiben entsprechender Dienste für den Betrieb der Maschinenlinie bereit.

Der Hypervisor kann des Weiteren eine Demilitarisierten Zone (DMZ) mit eigenen Netzwerksegmenten implementieren, in welchen wenigstens ein Teil der virtuellen Betriebsplattform implementiert ist. Beispielsweise sind in der DMZ solche Dienste gehostet, die einen Dienst öffentlich ins Internet zur Verfügung stellen und/oder Daten mit anderen Cloud Plattformen austauschen. Die DMZ ist eine Zone bzw. ein beispielhaftes Netzwerksegment. Die DMZ ist primär für öffentlich im Internet gehostete Dienste. Es kann noch andere Netzwerkzonen/-Segmente geben, je nachdem wie tief die Dienste entsprechend segmentiert werden sollen/müssen.

Gemäß Ausführungsformen können sich die Maschinen, bzw. die IPCs der Maschinen miteinander verbinden und eine Verbindung mit einem Netzwerk der Maschinenlinie herstellen. Das Netzwerk der Maschinenlinie verbindet somit eine Vielzahl von Maschinen miteinander, die jeweils auch einen IPC als software-definierte Edge-Vorrichtung umfassen, der gemäß Ausführungsformen konfiguriert ist. Durch die modulare Zusammensetzung dieser "Zellen", (Zelle heißt: Maschine mit IPC, auf dem ein Hypervisor/Betriebsplattform implementiert ist) lassen sich die Arbeitslasten unter den Maschinen in dem Netzwerk der Maschinenlinie aufteilen.

Die Zellen gemäß Ausführungsformen bilden jeweils eine kommunikativ eigenständige Einheit in der Maschinenlinie. Mittels einer Autorisierung kann sich eine Zelle automatisch mit dem Netzwerk der Maschinenlinie, also mit den anderen Zellen verbinden. Der IPC innerhalb der Zelle kann dabei als ein Eingangs-/Verbindungspunkt für die Zelle dienen und einen Firewall-Container für eingehende und ausgehende Kommunikation bereitstellen.

Beim Verbinden einer Maschine/Zelle mit dem Netzwerk kann die Verbindung automatisch erkannt werden und die korrekte Zuordnung der entsprechenden Zone/VLAN für die Vorrichtungen durchgeführt werden, sobald diese mit z.B. einem Switch verbunden sind. Beispielsweise kann ein zentraler Netzwerkverwaltungsdienst automatisch angeschlossene (bekannte/überprüfte) Geräte mit dem richtigen Netzwerk verbinden.

Wie in Figur 1 des Weiteren zu sehen ist, können auch Maschinen ohne entsprechende Autorisierungen ("Fremdmaschinen") an das Netzwerk angeschlossen werden. Optisch gekennzeichnet in Figur 1 ist die Paletten-Wickel-Maschine eine solche Fremdmaschine in diesem Beispiel. Wenn festgestellt wird, dass eine Maschine/Zelle in der Maschinenlinie eine Maschine/Zelle ohne Autorisierung (Trusted/Vertrauensstellung) ist, kann dennoch eine begrenzte Kommunikation mit der Maschine ohne Autorisierung hergestellt oder beibehalten werden. Die begrenzte Kommunikation kann beispielsweise einen eingeschränkten Zugriff der Fremdmaschine auf Netzwerkressourcen und/oder Netzwerksegmente in dem Netzwerk ermöglichen. Alternativ oder zusätzlich kann die begrenzte Kommunikation mit der Fremdmaschine überwacht und protokolliert werden.

Für unbekannte Geräte (Fremdmaschinen) kann ein Nutzer in einem HMI-Dialogfeld gefragt werden, ob das Gerät vertrauenswürdig ist, um welche Art von Gerät es sich handelt, zu welcher Gruppe es gehört usw. Der Netzwerkverwaltungsdienst kann das Gerät dann in die richtige Zone schieben und gegebenenfalls mit der begrenzten Kommunikationsfähigkeit ausstatten.

Gemäß Ausführungsformen kann, wenn festgestellt wird, dass eine Maschine in der Maschinenlinie mit Malware infiziert ist, die Kommunikation mit der infizierten Maschine beendet werden. Dies ist besonders effizient möglich, da jeder IPC bzw. die software-definierte Firewall jedes IPCs eine entsprechende Datenpaket-Überwachung bei eingehenden und/oder ausgehenden Nachrichten ausführt.

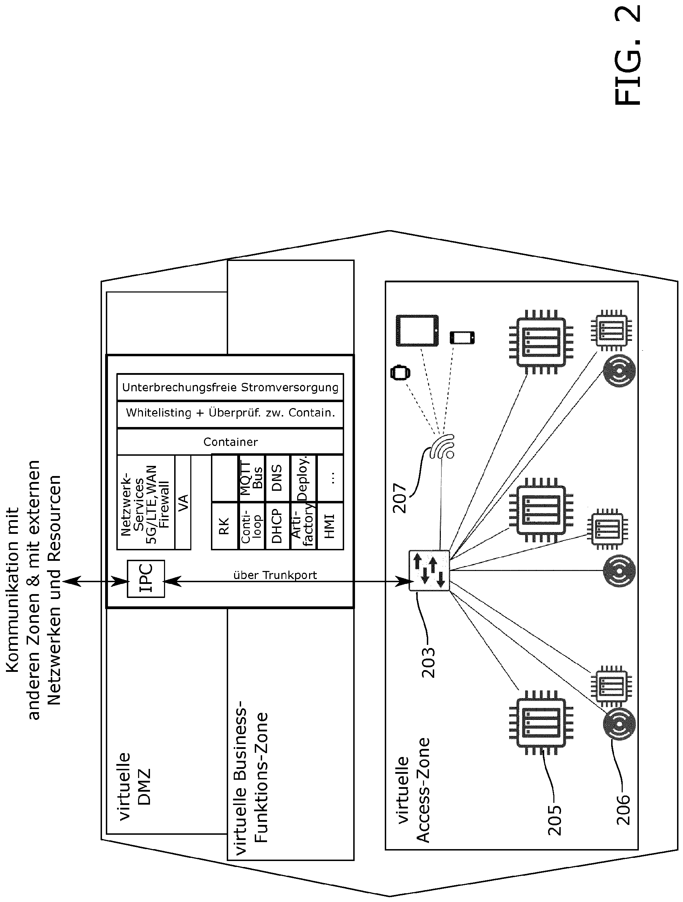

Das Aufteilen von Arbeitslasten unter den Maschinen/Zellen in dem Netzwerk der Maschinenlinie umfasst das Aufteilen von Aufgaben, die für die Ausführung des Netzwerkes an sich nötig sind. Beispielsweise bezieht sich das Aufteilen von Aufgaben auf softwaredefinierte Netzwerkdienste, aus einer Liste von Diensten, die für das Netzwerk nötig sind, wie beispielsweise ein APN-Dienst, ein DHCP-Dienst, ein DNS-Dienst, ein MQTT-Dienst und so weiter. Weitere Beispiele sind in Figur 2 gezeigt, in dem eine beispielhafte Maschine gezeigt ist, auf welcher eine virtuelle DMZ auf dem IPC implementiert ist. Der IPC kann (beispielsweise in der DMZ und/oder einer virtuellen Business-Funktions-Zone) die verschiedenen Dienste ausführen, oder auch nur einen Teil davon, so dass die Aufgaben unter den Zellen im Netzwerk aufgeteilt werden.

Beispielsweise können einige IPCs die Einwahl in ein Netzwerk (z.B. Internet, VPN,...) übernehmen, andere IPCs können einen DHCP-Service, andere einen DNS-Service, und wieder andere IPCs können Produkt-Arbeitslasten übernehmen. Hierdurch wird eine hohe Flexibilität und Sicherheit ermöglicht und ist ressourcenschonend.

Die Aufgabenaufteilung unter den Zellen kann eine Reihe weiterer beispielhafter Aufgaben und Aspekte umfassen. Beispielsweise kann eine Zelle dazu dienen, eine dynamische Paketverteilung für einen Lifecycle wenigstens eines IPC zu übernehmen. Weiterhin kann eine Zelle dafür verantwortlich sein, die Kommunikation von Administrations-Kommandos über eine mobile Datenverbindung zu steuern (wie beispielsweise über 5G) und Download von Paketen und/oder Artefakten über eine Fiber/DSL Verbindung zu steuern. Dadurch kann eine noch schnellere Inbetriebnahme der Anlage erreicht werden. Des Weiteren kann die Zelle die mobile 5G-Datenverbindung zusätzlich für eine schnellere Inbetriebnahme auch zum Herunterladen von benötigten Daten verwenden, falls noch keine Fiber/DSL-Verbindung verfügbar ist.

Wie beispielsweise in Figur 2 zu sehen, kann die virtuelle Access-Zone in einem anderen Kernel als die DMZ ausgeführt werden. Die virtuelle Access-Zone steuert und empfängt Daten von IPCs 205 der Maschine und von Sensoren 206, die an der Maschine Daten erfassen. Mit der virtuellen Access-Zone kann beispielsweise über einen Trunkport und einem "Managed Switch" mit Profinet-Kompatibilität kommuniziert werden. Direkter Zugriff auf HMIs, oder Mobilgeräte können auch über eine Datenverbindung 207 erfolgen.

Ausführungsformen der Erfindung liefern somit ein Netzwerktechnik-Konzept, das stark Software-definiert ist, so dass keine zusätzliche Netzwerk-Hardware zwischen den Maschinen bzw. Linien benötigt wird. Dadurch wird ein einfacher, modularer und skalierbarer Aufbau der Maschinen und deren Netzwerk ermöglicht.

Der IPC, bzw. die software-definierte Edge-Vorrichtung oder der entsprechende Hypervisor eines IPC kann sich gemäß Ausführungsformen mit beispielsweise einem Backend-Dienst verbinden, auf dem verschiedene zusätzliche Dienste zur Verfügung stehen, die entweder auf den IPC übertragen werden können, oder auf dem Backend-Server ausgeführt werden können. Des Weiteren kann auch eine Verbindung mit einem Datenzentrum hergestellt werden, auf dem weitere beispielsweise unternehmensspezifische Daten für die Dienste zur Verfügung gestellt werden können.

Die Erfindung kann auf einem Computer implementiert werden, der so konfiguriert ist, dass er spezifische Programmanweisungen ausführt, welche die Funktionalität der Erfindung ermöglichen. Die grundlegende Architektur dieses Computers umfasst mehrere Kernkomponenten, wie eine zentrale Verarbeitungseinheit (CPU), Speicher, Eingabe-Ausgabe-Systeme, Netzwerkkonnektivität, einem Bus etc. Die CPU ist verantwortlich für die Ausführung der Programmanweisungen. Sie verarbeitet Daten und steuert andere Komponenten des Systems. Der Speicher kann sowohl flüchtigen Speicher (RAM) als auch nicht-flüchtigen Speicher (wie Festplatten oder SSDs) umfassen. Der RAM bietet temporären Speicherplatz für laufende Prozesse und Daten, während der nicht-flüchtige Speicher dauerhafte Datenspeicherung ermöglicht. Die Eingabe-/Ausgabesysteme ermöglichen die Interaktion des Computers mit der Außenwelt, einschließlich Eingabegeräte wie Tastatur und Maus sowie Ausgabegeräte wie Bildschirme und Drucker. Die Netzwerkkonnektivität ermöglicht dem Computer die Verbindung mit anderen Computern und Netzwerken, was den Datenaustausch und die Fernzugriffsfähigkeit ermöglicht. Die Komponenten können über ein Bus-System miteinander verbunden sein.

Das computerlesbare Speichermedium enthält Programmanweisungen, die, wenn von der Computervorrichtung ausgeführt, die Vorrichtung so konfigurieren, dass sie die spezifischen Funktionen und Prozesse der Erfindung umsetzt. Diese Anweisungen können in Form von Software-Code vorliegen, der in einer Programmiersprache geschrieben ist und auf dem Speichermedium gespeichert ist. Wenn dieser Code von der CPU ausgeführt wird, ermöglicht er die Realisierung der Erfindung durch den Computer, indem er spezifische Algorithmen und Verarbeitungsschritte ausführt.

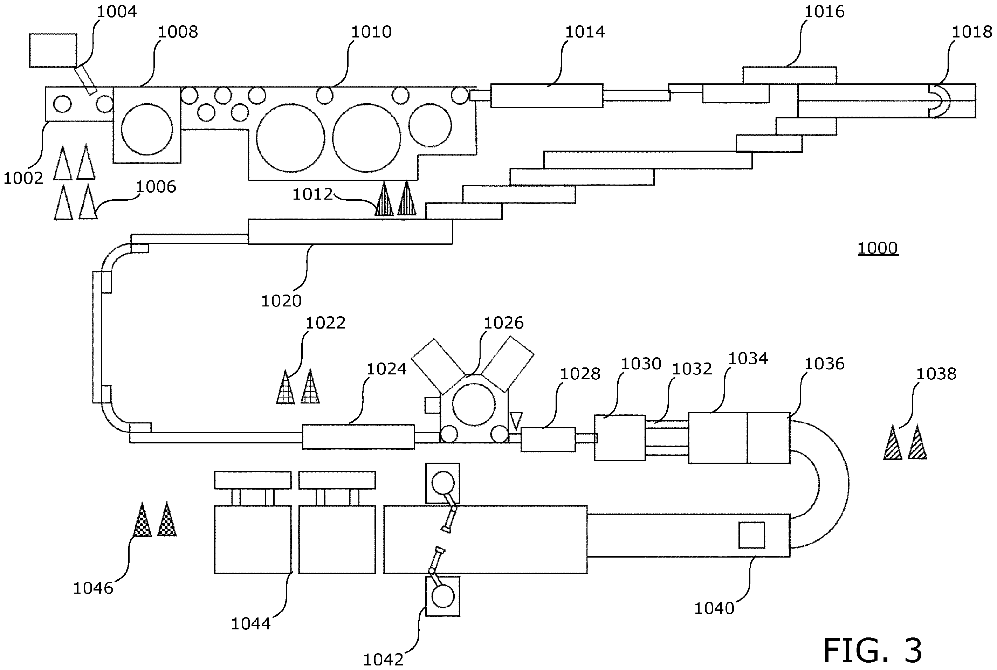

In den folgenden Figuren 3 bis 6 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 3 bis 6 soll nur eine allgemeine Übersicht über Maschinen geben, für welche Zustandsdaten gesammelt werden können, auf deren Grundlage das LLM Benutzeranfragen verarbeiten kann.

Figur 3 zeigt eine beispielhafte Anlagenkonfiguration 1000 für PET-Flaschen oder PET-Behälter und Klebegebinde. Wie in Figur 3 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfemen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer **1044** auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

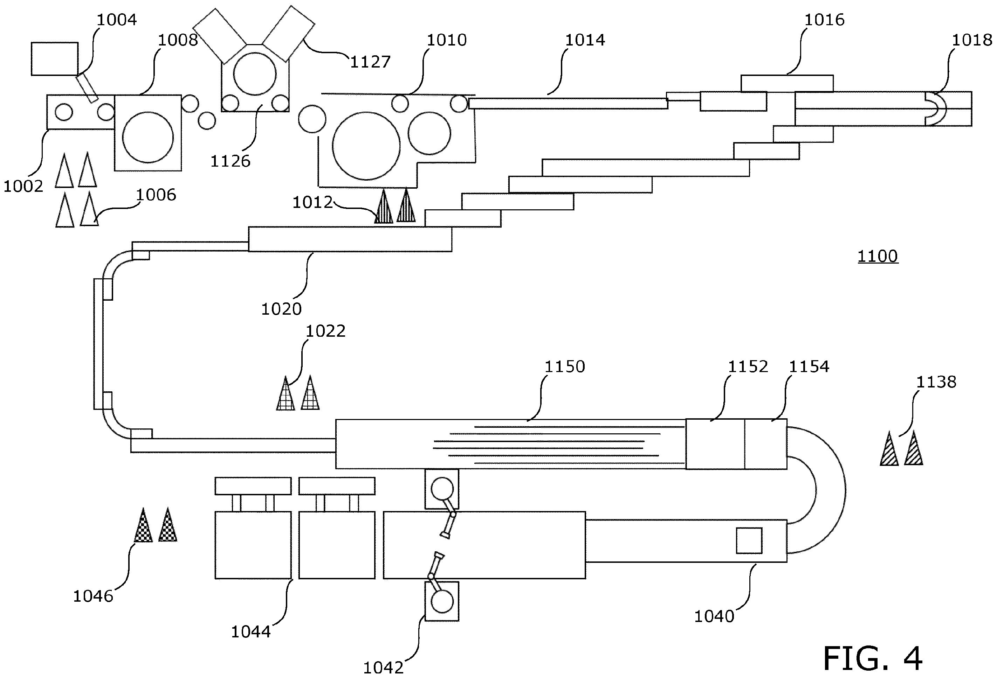

Figur 4 zeigt eine weitere beispielhafte Anlagenkonfiguration 1100 für PET-Behälter und Schrumpfpacker. Die Anlage 1100 aus Figur 4 umfasst viele der Module und Maschinen aus der Anlagenkonfiguration 1000 aus Figur 3, jedoch gibt es einige Unterschiede. Auf die Beschreibung der Module, die bereits in Zusammenhang mit Figur 3 beschrieben sind, wird daher für Figur 4 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

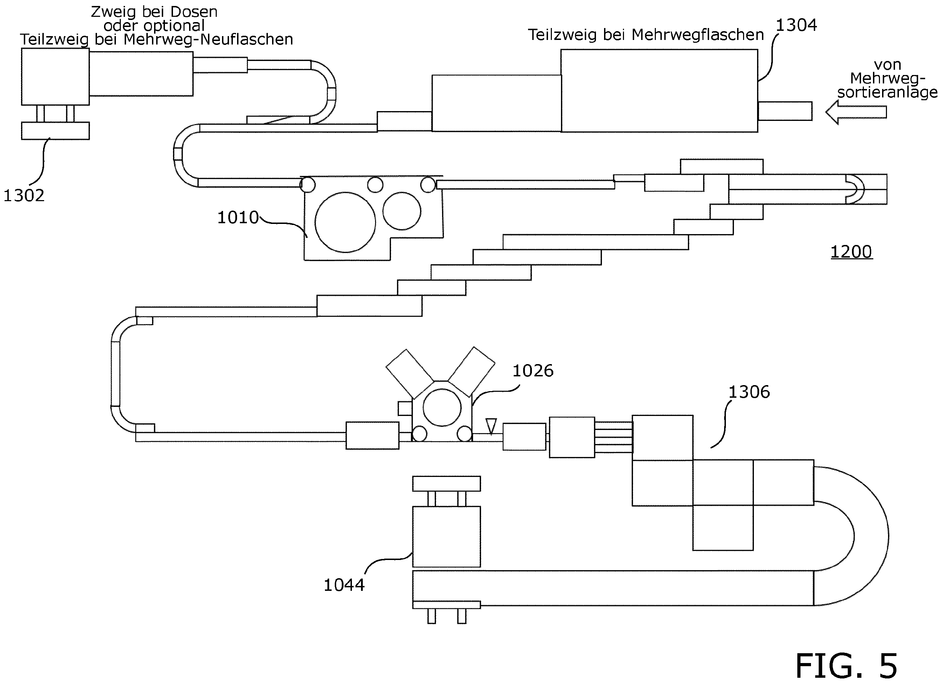

Figur 5 zeigt eine beispielhafte Anlagenkonfiguration 1200 für Dosen oder Glasflaschen. Die beispielhafte Anlagenkonfiguration 1200 aus Figur 5 hat wieder einige Ähnlichkeiten zu den Anlagenkonfigurationen 1000 und 1100 aus Figuren 3 und 4 und die Beschreibung der Anlagenkonfiguration beschränkt sich daher auf die Unterschiede der Anlagenkonfigurationen.

Wie in Figur 5 gezeigt, kann die beispielhafte Anlagenkonfiguration zwei separate Zuführungen umfassen. Eine erste Zufuhr, links in Figur 5, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 5, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

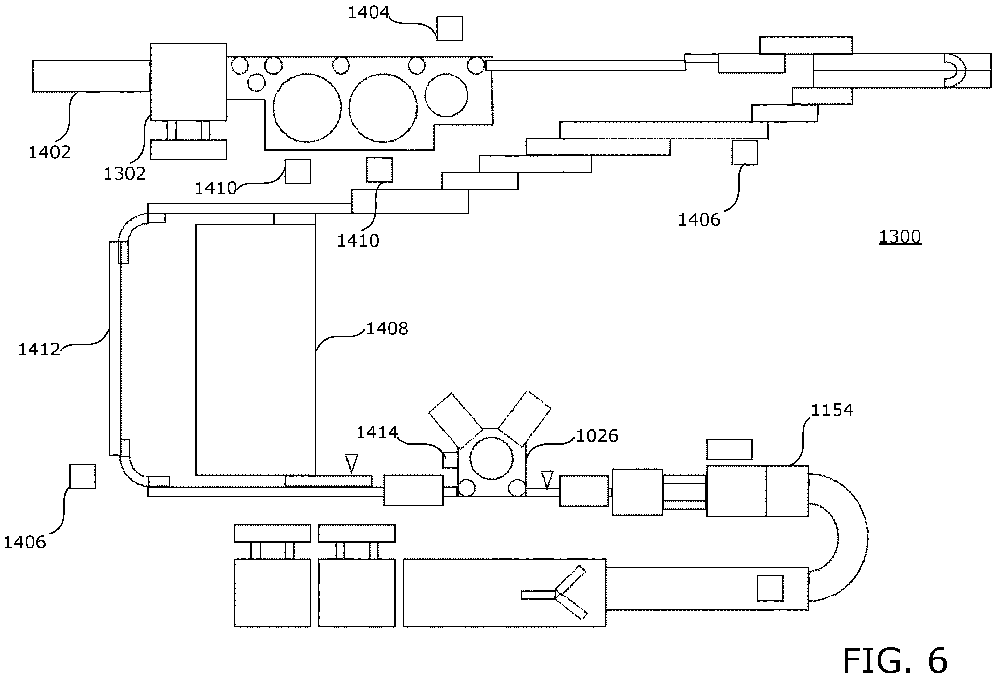

Figur 6 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin **1404** verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Maschine in einer Maschinenlinie, insbesondere in einer Maschinenlinie zum Abfüllen und Verpacken von Lebensmitteln und/oder Getränken, wobei die Maschine umfasst:
einen Industrie-PC, IPC, der eine software-definierte Edge-Vorrichtung für die Maschine implementiert und einen Hypervisor umfasst, wobei der Hypervisor ausgelegt ist zum:
Bereitstellen einer virtuellen Betriebsplattform zum Hosten und/oder Betreiben entsprechender Dienste für den Betrieb der Maschinenlinie.

2. Maschine nach Anspruch 1, wobei der Hypervisor des Weiteren ausgelegt ist zum:
Implementieren einer Demilitarisierten Zone, DMZ, mit eigenen Netzwerksegmenten, in welchen wenigstens ein Teil der virtuellen Betriebsplattform implementiert ist, wobei in der DMZ Dienste gehostet sind, die einen Dienst öffentlich ins Internet zur Verfügung stellen und/oder Daten mit anderen Cloud Plattformen austauschen.

3. Maschine nach einem der Ansprüche 1 oder 2, wobei der Hypervisor des Weiteren ausgelegt ist zum:
Herstellen einer Verbindung mit einem Netzwerk der Maschinenlinie, wobei das Netzwerk der Maschinenlinie eine Vielzahl von Maschinen miteinander verbindet, wobei jede der Vielzahl von Maschinen jeweils einen IPC als software-definierte Edge-Vorrichtung für die entsprechende Maschine implementiert und einen entsprechenden Hypervisor umfasst; und
Aufteilen von Arbeitslasten unter der Maschine und wenigstens einer zweiten Maschine in dem Netzwerk der Maschinenlinie;
wobei, wenn ein IPC einer Maschine aus dem Netzwerk ausfällt, der Hypervisor dazu ausgelegt ist, eine Arbeitslast des ausgefallenen IPC umzuverteilen und/oder zu übernehmen.

4. Maschine nach einem der Ansprüche 1 bis 3, wobei:
die Maschine eine kommunikativ eigenständige Zelle in der Maschinenlinie bildet;
die Maschine sich automatisch mittels einer Autorisierung mit dem Netzwerk der Maschinenlinie verbindet; und
der IPC innerhalb der Zelle ein Eingangs-/Verbindungspunkt für die Zelle ist und einen Firewall-Container für eingehende und ausgehende Kommunikation bereitstellt.

5. Maschine nach einem der Ansprüche 1 bis **4,** wobei der IPC des Weiteren mit WAN-, 5G- und/oder LTE-Kommunikationsmitteln ausgestattet ist und sich über die WAN-, 5G- und/oder LTE-Kommunikationsmittel selbstständig mit dem Internet verbinden kann.

6. Maschine nach einem der Ansprüche 3 bis 5, wobei der Hypervisor des Weiteren dazu ausgelegt ist zum:
Feststellen, dass eine Maschine in der Maschinenlinie eine Maschine ohne Autorisierung ist; und
Herstellen einer begrenzten Kommunikation mit der Maschine ohne Autorisierung, wobei die begrenzte Kommunikation einen eingeschränkten Zugriff der Maschine ohne Autorisierung auf Netzwerkressourcen und/oder Netzwerksegmente in dem Netzwerk ermöglicht und/oder wobei die begrenzte Kommunikation mit der Maschine ohne Autorisierung überwacht und protokolliert wird; und/oder
Feststellen, dass ein IPC einer Maschine in der Maschinenlinie mit Malware infiziert ist, und Beenden der Kommunikation mit der infizierten Maschine.

7. Maschine nach einem der Ansprüche 3 bis 6, wobei das Aufteilen von Arbeitslasten unter der Maschine und wenigstens einer zweiten Maschine in dem Netzwerk der Maschinenlinie umfasst:
Aufteilen von Aufgaben bezüglich eines softwaredefinierten Netzwerkdienstes aus einer Liste von Diensten, die für das Netzwerk nötig sind, insbesondere eines APN-Dienstes, eines DHCP-Dienstes, eines DNS-Dienstes, und/oder eines MQTT-Dienstes; und/oder
dynamische Paketverteilung für einen Lifecycle wenigstens eines IPC; und/oder
Steuerung oder Kommunikation von Administrations-Kommandos über eine mobile Datenverbindung und Download von Paketen und/oder Artefakten über eine Fiber/DSL Verbindung; und/oder
zusätzliches Verwenden einer mobilen 5G-Datenverbindung für eine schnellere Inbetriebnahme, falls noch keine Fiber/DSL-Verbindung verfügbar ist.

8. Maschine nach einem der Ansprüche 1 bis 7, wobei der Hypervisor des Weiteren dazu ausgelegt ist zum:
Virtualisieren einer Firewall und/oder Router -Funktionalität als softwaredefinierte Funktionen, so dass Access Layer und Core Layer in einer Hardwareeinheit des IPC integriert sind.

9. Computerlesbares Speichermedium mit darauf aufgezeichneten Programmanweisungen, die, wenn sie von wenigstens einer Computervorrichtung ausgeführt werden, die wenigstens eine Computervorrichtung konfigurieren zum:
Implementieren eines Hypervisors für eine software-definierte Edge-Vorrichtung für eine Maschine, wobei der Hypervisor ausgelegt ist zum:
Bereitstellen einer virtuellen Betriebsplattform zum Hosten und/oder Betreiben entsprechender Dienste für den Betrieb der Maschinenlinie.
wobei die Maschine Teil einer Maschinenlinie ist, insbesondere in einer Maschinenlinie zum Abfüllen und Verpacken von Lebensmitteln und/oder Getränken.

10. Maschinenlinie, insbesondere eine Maschinenlinie zum Abfüllen und Verpacken von Lebensmitteln und/oder Getränken, wobei die Maschinenlinie umfasst:
eine Vielzahl von Maschinen, die über ein Netzwerk miteinander verbunden sind, wobei jede der Maschinen einen Industrie-PC, IPC, umfasst, der eine software-definierte Edge-Vorrichtung für die Maschine implementiert und einen Hypervisor umfasst, wobei der Hypervisor ausgelegt ist zum:
Bereitstellen einer virtuellen Betriebsplattform zum Hosten und/oder Betreiben entsprechender Dienste für den Betrieb der Maschinenlinie.
